(19) Europäisches Patentamt European Patent Office Office européen des brevets

(11) **EP 3 125 690 B1**

(12) **EUROPEAN PATENT SPECIFICATION**

(45) Date of publication and mention of the grant of the patent:
**14.06.2023 Bulletin 2023/24**

(21) Application number: **15722357.9**

(22) Date of filing: **30.03.2015**

(51) International Patent Classification (IPC):
**A01N 33/22** (2006.01)    **A01N 43/50** (2006.01)

(52) Cooperative Patent Classification (CPC):
(C-Sets available)
**A01N 33/22**                    (Cont.)

(86) International application number:
**PCT/IL2015/050335**

(87) International publication number:
**WO 2015/151088 (08.10.2015 Gazette 2015/40)**

(54) **HERBICIDAL MIXTURE OF CAROTENOID BIOSYNTHESIS INHIBITING COMPOUND AND AN AHAS/ALS INHIBITING COMPOUND AND USES THEREOF**

HERBIZIDE MISCHUNG AUS EINER CAROTINOID-BIOSYNTHESEHEMMENDEN VERBINDUNG UND EINER AHAS-/ALS-HEMMENDEN VERBINDUNG UND VERWENDUNGEN DAVON

MÉLANGE HERBICIDE À BASE D'UN COMPOSÉ INHIBANT LA BIOSYNTHÈSE DE CAROTÉNOÏDE, COMPOSÉ INHIBITEUR D'AHAS/ALS ET LEUR UTILISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.04.2014 US 201461974165 P**

(43) Date of publication of application:
**08.02.2017 Bulletin 2017/06**

(73) Proprietor: **Adama Agan Ltd.**
**7710201 Ashdod (IL)**

(72) Inventors:
• **KERGOAT, Pierre-Yves**
  **F-75010 Paris (FR)**
• **WINDREICH, Shlomo**
  **5237699 Ramat-Gan (IL)**

(74) Representative: **Modiano, Micaela Nadia**
**Modiano & Partners**
**Thierschstrasse 11**
**80538 München (DE)**

(56) References cited:
**EP-B1- 1 220 609       WO-A1-02/100173**
**DE-A1- 19 919 951      US-A1- 2009 298 691**

• **DATABASE CAPLUS [Online] CHEMICAL ABSTRACTS SERVICE, COLUMBUS, OHIO, US; 2002, DESMOND BROWN AND JOHN MASIUNAS: "Evaluation of Herbicides for Pumpkin (Cucurbita spp.)1", XP002741429, Database accession no. 2002:517498**
• **Desmond Brown ET AL: "Evaluation of Herbicides for Pumpkin (Cucurbita spp.) 1", Weed Technology, vol. 16, no. 2, 1 April 2002 (2002-04-01), pages 282-292, XP055563473, US ISSN: 0890-037X, DOI: 10.1614/0890-037X(2002)016[0282:EOHFPC]2.0 . CO;2**

EP 3 125 690 B1

(52) Cooperative Patent Classification (CPC): (Cont.)

C-Sets
**A01N 33/22, A01N 43/50**

## Description

### TECHNICAL FIELD

The present subject matter relates to a herbicidal mixture, more specifically a herbicidal formulation for controlling undesired vegetation.

### BACKGROUND

The control of undesired vegetation is extremely important in order to achieve high crop efficiency. In many cases, while herbicides have an effect against a spectrum of weeds, they do not however fight a certain type of other weeds, which is also present in the crop cultures to be protected. Therefore, there is a strong need for mixing two or more herbicides.

Mixtures of selected herbicides have several advantages over the use of a single herbicide including (a) an increase in the spectrum of weeds controlled or an extension of weed control over a longer period of time, (b) an improvement in crop safety by using minimum doses of selected herbicides applied in combination rather than a single high dose of one herbicide, and (c) a delay in the appearance of resistant weed species to selected herbicides (Int. J. Agri. Biol., Vol. 6, No. 1, 2004, pages 209-212).

However, the activity and selectivity behavior of any specific mixture is difficult to predict since the behavior of each single herbicide in the mixture is often affected by the presence of the other(s) and the activity of the mixture may also vary considerably depending on chemical character, plant species, growth stage, and environmental conditions. Mostly, this practice results in reduced activity of the herbicides in the mixture.

Some herbicides act by inhibiting the synthesis of carotenoids that protect chlorophyll from being destroyed by oxidation.

Aclonifen (2-Chlor-6-nitro-3-phenoxyanilin), disclosed in US 4,394,159 is a carotenoid biosynthesis inhibitor. It is a systemic, selective herbicide. Aclonifen is used for pre-emergence control of grass and broad-leaved weeds winter wheat, potatoes, sunflowers, peas, carrots, maize, and some other crops. It is known to be non-phytotoxic to potatoes, sunflowers and peas.

Some herbicides act by inhibiting the synthesis of branched-chain amino acids, specifically the inhibition of acetolactate synthase (ALS) or acetohydroxyacid synthase (AHAS). All of the herbicides within this mode of action act upon specific enzymes to prevent production of amino acids.

Imazamox ( 2-[(*RS*)-4-isopropyl-4-methyl-5-oxo-2-imidazolin-2-yl]-5-methoxymethylnicotinic acid), disclosed in US 5,334,576, is a branched chain amino acid (leucine, isoleucine and valine) synthesis (ALS or AHAS) inhibitor. It is taken up by both foliage root, and translocated to growing points. Imazamox is a pre- or post- emergence herbicide used for the control of weeds in maize, rape, alfalfa, peas and beans.

### SUMMARY

According to one aspect, the present subject matter provides a herbicidal mixture for the selective control of weeds and grasses in crops of cultivated plants, comprising a) a herbicide which inhibits carotenoid biosynthesis; and b) a herbicide which inhibits the action of ALS/AHAS, or an ester or salt of any of the foregoing, or a combination thereof. In an embodiment, the herbicide which inhibits carotenoid biosynthesis is aclonifen and the herbicide which inhibits the action of ALS/AHAS is imazamox.

According to another aspect, the present subject matter provides a herbicidal composition for the selective control of weeds and grasses in crops of cultivated plants comprising a) a herbicide which inhibits carotenoid biosynthesis; b) a herbicide which inhibits the action of ALS/AHAS.

According to another aspect, the present subject matter provides a method of controlling undesired vegetation comprising applying to a locus of the undesired vegetation a herbicidal effective amount of a mixture comprising a) a herbicide which inhibits carotenoid biosynthesis; b) a herbicide which inhibits the action of ALS/AHAS, or an ester or salt of any of the foregoing, or a combination thereof.

According to another aspect, the present subject matter provides a herbicidal mixture comprising aclonifen and imazamox, esters, salts and/or combinations thereof.

According to one aspect, the present subject matter provides a synergistic herbicidal mixture for the selective control of weeds and grasses in crops of cultivated plants, comprising a) a herbicide which inhibits carotenoid biosynthesis; and b) a herbicide which inhibits the action of ALS/AHAS, or an ester or salt of any of the foregoing, or a combination thereof.

According to another aspect, the present subject matter provides a synergistic composition for the selective control of weeds and grasses in crops of cultivated plants comprising a) a herbicide which inhibits carotenoid biosynthesis;

b) a herbicide which inhibits the action of ALS/AHAS. The composition may further include c) at least one agriculturally acceptable carrier.

## DETAILED DESCRIPTION

Definitions

Prior to setting forth the present subject matter in detail, it may be helpful to provide definitions of certain terms to be used herein. Unless defined otherwise, all technical and scientific terms used herein have the same meaning as is commonly understood by one of skill in the art to which this subject matter pertains. As used herein, the terms "aspects", "subject matter" and "embodiments" do not define parts of the invention, unless specified.

As used herein, the phrase "agriculturally acceptable carrier" means carriers which are known and accepted in the art for the formation of formulations for agricultural or horticultural use.

As used herein, the term "crop" includes reference to a whole plant, plant organ (e.g., leaves, stems, twigs, roots, trunks, limbs, shoots, fruits etc.), plant cells, or plant seeds. This term also encompasses plant crops such as fruits. In yet another embodiment, the term "plant" may include the propagation material thereof, which may include seeds and spores, vegetative structures such as bulbs, corms, tubers, rhizomes, roots stems, basal shoots, stolons, and buds.

As used herein, the term "locus" includes not only areas where weeds may already be growing, but also areas where weeds have yet to emerge, and also to areas under cultivation.

As used herein, the term "mixture" or "combination" refers, but is not limited to, a combination in any physical form, e.g., blend, solution, alloy, or the like.

As used herein, the term "post-emergence," refers to the application of the herbicide composition to the weeds that have emerged from the soil. The term "pre-emergence" refers to the application of the herbicide composition to a habitat, a weed, or soil, prior to the emergence of the weeds from the soil.

As used herein, the term "control of undesirable vegetation" refers to the interference with the normal growth and development of undesired vegetation. Examples of control activity include, but are not limited to, inhibition of root growth, inhibition of shoot growth, inhibition of shoot emergence, inhibition of seed production, or reduction of weed biomass.

As used herein, the term "effective amount" refers to an amount of the compound that, when ingested, contacted with or sensed, is sufficient to achieve a good level of control.

The term "a" or "an" as used herein includes the singular and the plural, unless specifically stated otherwise. Therefore, the terms "a," "an" or "at least one" can be used interchangeably in this application.

Throughout the application, descriptions of various embodiments use the term "comprising"; however, it will be understood by one of skill in the art, that in some specific instances, an embodiment can alternatively be described using the language "consisting essentially of" or "consisting of."

For purposes of better understanding the present teachings and in no way limiting the scope of the teachings, unless otherwise indicated, all numbers expressing quantities, percentages or proportions, and other numerical values used in the specification and claims, are to be understood as being modified in all instances by the term "about." Accordingly, unless indicated to the contrary, the numerical parameters set forth in the following specification and attached claims are approximations that may vary depending upon the desired properties sought to be obtained. At the very least, each numerical parameter should at least be construed in light of the number of reported significant digits and by applying ordinary rounding techniques. In this regard, used of the term "about" herein specifically includes $\pm 10\%$ from the indicated values in the range. In addition, the endpoints of all ranges directed to the same component or property herein are inclusive of the endpoints, are independently combinable, and include all intermediate points and ranges.

Herbicidal Mixtures/Compositions

The present subject matter relates to a herbicidal mixture comprising a herbicide which inhibits carotenoid biosynthesis and a herbicide which inhibits the action of ALS/AHAS.

In one embodiment, the herbicide which inhibits carotenoid biosynthesis may include, but are not limited to mesotrione, sulcotrione, tembotrione, isoxachlortole, isoxaflutole, benzofenap, pyrazolynate, pyrazoxyfen, norflurazon, diflufenican, picolinafen, amitrole, clomazone, fluometuron, aclonifen, topramezone, benzobicyclon, beflubutamid, fluridone, flurochloridone, flurtamone, and salts, esters, acids, or partial acid forms thereof (e.g., sodium salts thereof). In a specific embodiment, the herbicide which inhibits carotenoid biosynthesis may be aclonifen.

In one embodiment, the herbicide which inhibits the action of ALS/AHAS may include, but are not limited to flucarbazone, propoxycarbazone, thiencarbazone, amidosulfuron, azimsulfuron, bensulfuron-methyl, chlorimuron-ethyl, chlorsulfuron, cinosulfuron, cyclosulfamuron, ethametsulfuron-methyl, ethoxysulfuron, flazasulfuron, flupyrsulfuron-methyl, foramsulfuron, halosulfuron-methyl, imazosulfuron, iodosulfuron, metsulfuron-methyl, nicosulfuron, oxasulfuron, primisulfuron- methyl, prosulfuron, pyrazosulfuron-ethyl, rimsulfuron, sulfometuron-methyl, sulfosulfuron, thifensulfuron-methyl, triasulfuron, tribenuron-methyl, trifloxysulfuron, triflusulfuron- methyl, tritosulfuron, imazapic, imazamethabenz-methyl, imazamox, imazapyr, imazaquin, and imazethapyr, cloransulam-methyl, diclosulam, florasulam, flumetsulam, metosulam, bispyribac, pyribenzoxim, pyriftalid, pyrithiobac, pyriminobac-methyl, and salts, esters, acids, or partial acid forms thereof. In a specific embodiment, the herbicide which inhibits the action of ALS/AHAS may be imazamox.

In an embodiment, the present subject matter relates to a herbicidal mixture of aclonifen and imazamox.

In certain instances, combinations of herbicides of the present subject matter can result in synergistic effect on weeds on crops or other plants. Reducing the quantity of active ingredients applied to the locus while ensuring effective pest control is always desirable. Ability to use greater amounts of active ingredients to provide more effective weed control without excessive crop injury is also desirable.

The present invention relates to a synergistic herbicidal mixture of aclonifen and imazamox, or an ester or salt of any of the foregoing, and/or a combination thereof wherein the weight ratio is from 1:15 to 15:1.

The weight ratio of the herbicide which inhibits carotenoid biosynthesis to the herbicide which inhibits the action of ALS/AHAS cannot generally be defined, as it varies depending upon various conditions such as the type of the formulation, weather conditions, the type of crop and the type of weeds.

In one embodiment, the weight ratio of the herbicide which inhibits carotenoid biosynthesis to the herbicide which inhibits the action of ALS/AHAS in the mixture is from about 1:100 to 100:1. In another embodiment, the weight ratio is from about 0.5-5:10-30 to 10-30:0.5-5. In another embodiment, the weight ratio is from about 1:15 to 15:1. In a specific embodiment, the weight ratio is from about 10:1 to 20:1.

The present subject matter further relates to a composition for the selective control of weeds and grasses in crops of cultivated plants comprising a herbicide which inhibits carotenoid biosynthesis; a herbicide which inhibits the action of ALS/AHAS or an ester or salt of any of the foregoing, and/or a combination thereof. In some embodiments, the composition may further include an agriculturally acceptable carrier. The present invention relates to a herbicidal synergistic composition comprising the synergistic mixture of aclonifen and imazamox, or salts, esters, acids or partial acid forms thereof wherein the weight ratio is from 1:15 to 15:1.

In a specific embodiment, the present subject matter further relates to a composition comprising aclonifen and imazamox and an agriculturally acceptable carrier.

In yet another embodiment, the composition comprises at least one additional component selected from the group of surfactants, solid diluents and liquid diluents.

The present composition can be made at the time of use, or diluted. The present compositions can also be concentrated compositions, or so-called "ready-to-use" compositions, that is to say, compositions ready for use.

The present composition may be employed or prepared in any conventional form, for example, in the form of a twin pack, or for example, as wettable powders (WP), emulsion concentrates (EC), microemulsion concentrates (MEC), water-soluble powders (SP), water-soluble concentrates (SL), suspoemulsion (SE), oil dispersions (OD), concentrated emulsions (BW) such as oil-in-water and water-in-oil emulsions, sprayable solutions or emulsions, capsule suspensions (CS), suspension concentrates (SC), dustable powders (DP), oil-miscible solutions (OL), seed-dressing products, granules (GR) in the form of micro granules, spray granules, coated granules and absorption granules, granules for soil application or broadcasting, water-soluble granules (SG), water-dispersible granules (WDG), ULV formulations, microcapsules or waxes. These individual formulation types are known in principle and are described in the prior art.

Such compositions can be formulated using agriculturally acceptable carriers, surfactants or other application-promoting adjuvants customarily employed in formulation technology and formulation techniques that are known in the art.

In an embodiment, the amount of the mixture of active ingredients in the composition is about 0.1-99 wt. %, about 0.1-95 wt. %, or about 0.1-90 wt. %, based on the total weight of the composition. In another embodiment, the amount of the mixture of active ingredients in the composition is about 20-40 wt %, based on the total weight of the composition. In yet another embodiment, the amount of the mixture of active ingredients in the composition is from about 0.1%, 0.5%, 1%, 1.5%, 2%, 2.5%, 3%, 3.5%, 4%, 4.5%, 5% to about 90%, 93%, 95%, 98%, 99% based on the total weight of the composition.

In a specific embodiment, the amount of the mixture of active ingredients in the composition is about 31 wt %, based on the total weight of the composition.

The present composition may include (i) active ingredients in an amount of approximately 20-40 wt %; (ii) surfactants in an amount of approximately 1-5 wt %; (iii) propylene glycol in an amount of approximately 5-10 wt %; (iv) other additives in an amount of approximately < 1 wt %; and (v) liquid carrier in an amount of approximately 50-70 wt %.

Examples of suitable liquid carriers potentially useful in the present compositions include but are not limited to water; aromatic hydrocarbons such as alkylbenzenes and alkylnaphthalenes; alcohols such as methanol, cyclohexanol, and decanol; ethylene glycol; polypropylene glycol; dipropylene glycol; N,N-dimethylformamide; dimethylsulfoxide; N-alkylpyrrolidones such as N-methyl-2-pyrrolidone; paraffins; various oils such as olive, castor, linseed, tung, sesame, corn, peanut, cotton-seed, soybean, rape-seed, or coconut oil; fatty acid esters; ketones such as cyclohexanone, 2-heptanone, isophorone, and 4-hydroxy-4-methyl-2-pentanone; and the like.

Examples of suitable solid carriers potentially useful in the present compositions include but are not limited to mineral earths such as silica gels, silicates, talc, kaolin, sericite, attaclay, limestone, bentonite, lime, chalk, bole, mirabilite, loess, clay, dolomite, zeolite, diatomaceous earth, calcium carbonate, calcium sulfate, magnesium sulfate, magnesium oxide, sodium carbonate and bicarbonate, and sodium sulfate; ground synthetic materials; fertilizers such as ammonium sulfate, ammonium phosphate, ammonium nitrate, ureas, and products of vegetable origin, such as cereal meal, tree bark meal, wood meal, and nutshell meal; cellulose powders; and other solid carriers.

Surfactants may refer to any agriculturally acceptable material which imparts emulsifiability, stability, spreading, wetting, dispersibility, or other surface-modifying properties. Examples of suitable surfactants include, but are not limited to, non-ionic, anionic, cationic and ampholytic types such as alkoxylated fatty alcohols, ethoxylated polysorbate (e.g. tween 20), ethoxylated castor oil, lignin sulfonates, fatty acid sulfonates (e.g. lauryl sulfonate), phosphate esters such as phosphate esters of alcohol alkoxylates, phosphate esters of alkylphenol alkoxylates and phosphate esters of styrylphenol ethoxylates, condensates of sulfonated naphthalene and naphthalene derivatives with formaldehyde, condensates of naphthalene or of naphthalenesulfonic acid with phenol and formaldehyde, alkylarylsulfonates, ethoxylated alkylphenols and aryl phenols, polyalkylene glycols and sorbitol esters, alkali metal, sodium salts of lignosulphonates, tristyrylphenol ethoxylate phosphate esters, aliphatic alcohol ethoxylates, alkylphenol ethoxylates, ethylene oxide/propylene oxide block copolymers, graft copolymers and polyvinyl alcohol-vinyl acetate copolymers. Other surfactants known in the art may be used as desired.

Other ingredients, such as wetting agents, anti-foaming, adhesives, neutralizers, thickeners, binders, sequestrates, fertilizers, biocides, stabilizers, buffers or anti-freeze agents, may also be added to the present compositions in order to increase the stability, density, and viscosity of the described compositions.

Aqueous use forms can be prepared from emulsion concentrates, suspensions, pastes, wettable powders or water-dispersible granules by adding water. To prepare emulsions, pastes or oil dispersions, the components of the compositions either as such or dissolved in an oil or solvent, can be homogenized in water by means of a wetting agent, tackifier, dispersant or emulsifier. Alternatively, it is also possible to prepare concentrates comprising active ingredient, wetting agent, tackifier, dispersant or emulsifier and, if desired, solvent or oil, which are suitable for dilution with water.

The present mixtures and compositions may include additional crop protection agents, for example insecticides, herbicides, fungicides, bactericides, nematicides, molluscicides, growth regulators, biological agents, fertilizers, or mixtures thereof. However, for the avoidance of doubt it is understood that such additional crop protection agents are unnecessary to achieve the synergistic effects of the present combinations. Accordingly, the present herbicidal compositions and herbicidal mixtures may be limited to containing a herbicide which inhibits carotenoid biosynthesis (e.g. aclonifen) and a herbicide which inhibits the action of ALS/AHAS (e.g. imazamox) as the only crop protection agents and/or herbicides present.

Without departing from the scope of the subject matter, the mixture and formulations of the present subject matter may be applied in conjunction with one or more co-herbicides to control a wider variety of undesirable vegetation. When used in conjunction with co-herbicides, the composition can be formulated with the co-herbicide or co-herbicides, tank mixed with the co-herbicide or co-herbicides or applied sequentially with the co-herbicide or co-herbicides. Some of the co-herbicides that can be employed in conjunction with the mixture of the present subject matter include but are not limited to 2,4-D, 2,4-D-butotyl, 2,4-D-butyl, 2,4-D-dimethylammonium, 2,4-D-diolamine, 2,4-D-ethyl, 2,4-D-2-ethylhexyl, 2,4-D- isobutyl, 2,4-D-isoctyl, 2,4-D-isopropyl, 2,4-D-isopropylammonium, 2,4-D-sodium, 2,4-D-isopropanolammonium, 2,4-D-trolamine, 2,4-DB, 2,4-DB-butyl, 2,4-DB-dimethylammonium, 2,4-DB-isoctyl, 2,4-DB-potassium, 2,4-DB-sodium, dichlorprop, dichlorprop-butotyl, dichlorprop-dimethylammonium, dichlorprop-isoctyl, dichlorprop-potassium, dichlorprop-P, dichlorprop-P-dimethylammonium, dichlorprop-P-potassium, dichlorprop-P-sodium, MCPA, MCPA-butotyl, MCPA-dimethylammonium, MCPA-2-ethylhexyl, MCPA-potassium, MCPA-sodium, MCPA-thioethyl, MCPB, MCPB-ethyl, MCPB-sodium, mecoprop, mecoprop-butotyl, mecoprop-sodium, mecoprop-P, mecoprop-P-butotyl, mecoprop-P-dimethylammonium, mecoprop-P-2-ethylhexyl, mecoprop-P-potassium, naproanilide, clomeprop, 2,3,6-TBA, dicamba, dicamba-butotyl, dicamba-diglycolamine, dicamba- dimethylammonium, dicamba-diolamine, dicamba-isopropylammonium, dicambapotassium, dicamba-sodium, dichlobenil, picloram, picloram-dimethylammonium, picloramisoctyl, picloram-potassium, picloram-triisopropanolammonium, picloram-triisopropylammonium, picloram-trolamine, triclopyr, triclopyr-butotyl, triclopyr-triethylammonium, clopyralid, clopyralid-olamine, clopyralid-potassium, clopyralid-triisopropanolammonium, aminopyralid, naptalam, naptalam- sodium, benazolin, benazolin-ethyl, quinclorac, quinmerac, diflufenzopyr, diflufenzopyr- sodium, fluroxypyr, fluroxypyr-2-butoxy-1-methylethyl, fluroxypyr-meptyl, chlorflurenol, chlorflurenol-methyl, aminocyclopyrachlor, aminocyclopyrachlor-methyl, aminocyclopyrachlor-potassium, chlorotoluron, diuron, fluometuron, linuron, isoproturon, metobenzuron, tebuthiuron, dimefuron, isouron, karbutilate, methabenzthiazuron, metoxuron, monolinuron, neburon, siduron, terbumeton, trietazine, metobromuron, simazine, atrazine, atratone, simetryn, prometryn, dimethametryn, hexazinone, metribuzin, teroutnyiazine, cyanazine, ametryn, cybutryne, triaziflam, indaziflam, terbutryn, propazine, metamitron, prometon, bromacil, bromacyl-lithium, lenacil, terbacil, propanil, cypromid, swep, desmedipham, phenmedipham, bromoxynil, bromoxynil-octanoate, bromoxynil-heptanoate, ioxynil, ioxynil-octanoate, ioxynil- potassium, ioxynil-sodium, pyridate, bentazone, bentazone- sodium, amicarbazone, methazole, pentanochlor, paraquat, diquat, nitrofen, chlomethoxyfen, bifenox, acifluorfen, acifluorfen-sodium, fomesafen, fomesafen-sodium, oxyfluorfen, lactofen, ethoxyfen-ethyl (HC-252), fluoroglycofen-ethyl, fluoroglycofen, chlorphthalim, flumioxazin, flumiclorac, flumiclorac-pentyl, cinidon-ethyl, fluthiacet, fluthiacet-methyl, oxadiargyl, oxadiazon, sulfentrazone, carfentrazone-ethyl, thidiazimin, pentoxazone, azafenidin, isopropazole, pyraflufen-ethyl, benzfendizone, butafenacil, saflufenacil, flupoxam, fluazolate, profluazol, pyraclonil, flufenpyr-ethyl, bencarbazone, ethyl[3-(2- chloro-4-fluoro-5-(3-methyl-2,6-dioxo-4-trifluoromethyl-3,6-dihydro-2H-pyrimidin-1- yl)phenoxy)pyridin-2-yloxy]acetate (SYN-523), norflurazon, chloridazon, metflurazon, pyrazolynate, pyrazoxyfen, benzofenap, topramezone, pyrasulfotole, amitrole, fluridone, flurtamone, diflufenican, methoxyphenone, clomazone, sulcotrione, mesotrione, tembotrione, tefuryltrione, bicyclopyrone, isoxaflutole, difenzoquat, difenzoquat-metilsulfate, isoxachlortole, benzobicyclon, picolinafen, beflubutamid, diclotop-methyl, diclotop, pyriphenop-sodium, fluazifop-butyl, fluazifop, fluazifop-P, fluazifop-P-butyl, haloxyfop- methyl, haloxyfop, haloxyfop-etotyl, haloxyfop-P, haloxyfop-P-methyl, quizalofop-ethyl, quizalofop-P, quizalofop-P-ethyl, quizalofop-P-tefuryl, cyhalofop-butyl, fenoxaprop-ethyl, fenoxaprop-P, fenoxaprop-P-ethyl, metamifop-propyl, metamifop, clodinafop-propargyl, clodinafop, propaquizafop, alloxydim-sodium, alloxydim, clethodim, sethoxydim, tralkoxydim, butroxydim, tepraloxydim, profoxydim, cycloxydim, flamprop-M-methyl, flamprop-M, flamprop-M- isopropyl, chlorimuron-ethyl, chlorimuron, sulfometuron-methyl, sulfometuron, primisulfuron-methyl, primisulfuron, bensulfuron-methyl, bensulfuron, chlorsulfuron, metsulfuron-methyl, metsulfuron, cinosulfuron, pyrazosulfuron-ethyl, pyrazosulfuron, azimsulfuron, rimsulfuron, imazosulfuron, cyclosulfamuron, prosulfuron, flupyrsulfuron-methyl-sodium, flupyrsulfuron, triflusulfuron-methyl, triflusulfuron, halosulfuron-methyl, halosulfuron, thifensulfuron-methyl, thifensulfuron, ethoxysulfuron, oxasulfuron, ethametsulfuron, ethametsulfuron-methyl, iodosulfuron, iodosulfuron-methyl-sodium, sulfosulfuron, triasulfuron, tribenuron-methyl, tribenuron, tritosulfuron, foramsulfuron, trifloxysulfuron, trifloxysulfuron-sodium, mesosulfuron, mesosulfuron-methyl, orthosulfamuron, flucetosulfuron, amidosulfuron, propyrisulfuron, metazosulfuron, iofensulfuron, flumetsulam, metosulam, diclosulam, cloransulam-methyl, florasulam, penoxsulam, pyroxsulam, imazapyr, imazapyr-isopropylammonium, imazethapyr, imazethapyr- ammonium, imazaquin, imazaquin-ammonium, imazamethabenz, imazamethabenz-methyl, imazapic, pyrithiobac-sodium, bispyribac-sodium, pyriminobac-methyl, pyribenzoxim, pyriftalid, pyrimisulfan, triafamone, flucarbazone, flucarbazone-sodium, propoxycarbazone-sodium, propoxycarbazone or thiencarbazone, glyphosate, glyphosate-sodium, glyphosate- potassium, glyphosate-ammonium, glyphosate-diammonium, glyphosate- isopropylammonium, glyphosate-trimesium, glyphosate-sesquisodium, glufosinate, glufosinate-ammonium, glufosinate-P, glufosinate-P-ammonium, glufosinate-P-sodium, bilanafos, bilanafos-sodium, cinmethylin, trifluralin, oryzalin, nitralin, pendimethalin, ethalfluralin, benfluralin, prodiamine, butralin, dinitramine, bensulide, napropamide, propyzamide, pronamide, amiprofos-methyl, butamifos, anilofos, piperophos, propham, chlorpropham, barban, carbetamide, daimuron, cumyluron, bromobutide, methyldymron, asulam, asulam-sodium, dithiopyr, thiazopyr, chlorthal-dimethyl, chlorthal, diphenamid, alachlor, metazachlor, butachlor, pretilachlor, metolachlor, thenylchlor, pethoxamid, acetochlor, propachlor, dimethenamid, dimethenamid-P, propisochlor, dimethachlor, molinate, dimepiperate, pyributicarb, EPTC, butylate, vernolate, pebulate, cycloate, prosulfocarb, esprocarb, thiobencarb, triallate, diallate, orbencarb, etobenzanid, flufenacet, mefenacet, tridiphane, cafenstrole, fentrazamide, oxaziclomefone, indanofan, benfuresate, pyroxasulfone, fenoxasulfone, dalapon, dalapon-sodium, TCA-sodium, trichloroacetic acid, MSMA, DSMA, CMA, endothall, endothall-dipotassium, endothall-sodium, endothall-mono(N,N-dimethylalkylammonium), ethofumesate, sodium chlorate, pelargonic acid (nonanoic acid), fosamine, fosamine-ammonium, pinoxaden, ipfencarbazone, aclolein, ammonium sulfamate, borax, chloroacetic acid, sodium chloroacete, cyanamide, methylarsonic acid, dimethylarsinic acid, sodium dimethylarsinate, dinoterb, dinoterb-ammonium, dinoterb-diolamine, dinoterb-acetate, DNOC, ferrous sulfate, flupropanate, flupropanate-sodium, isoxaben, mefluidide, mefluidide-diolamine, metam, metam-ammonium, metam-potassium, metam-sodium, methyl isothiocyanate, pentachlorophenol and sodium pentachlorophenoxide.

Additionally, the present subject matter provides a method of controlling undesired vegetation comprising applying to a locus of the undesired vegetation a herbicidally effective amount of a) a herbicide which inhibits carotenoid biosynthesis; b) a herbicide which inhibits the action of ALS/AHAS, or an ester or salt of any of the foregoing, and/or a combination thereof. The invention relates to a method of controlling undesired vegetation comprising applying to a locus of the undesired vegetation a herbicidally effective amount of a mixture of aclonifen and imazamox, or salts, esters, acids or partial acid forms thereof wherein the weight ratio is from 1:15 to 15:1.

In an embodiment, the present subject matter provides a method of controlling undesired vegetation comprising applying to a locus of the undesired vegetation a composition comprising an a) a herbicide which inhibits carotenoid biosynthesis; b) a herbicide which inhibits the action of ALS/AHAS, or an ester or salt of any of the foregoing, and/or a combination thereof; and at least one agriculturally acceptable carrier. The invention relates to a method of controlling undesired vegetation comprising applying to a locus of the undesired vegetation a composition comprising the mixture of aclonifen and imazamox, or salts, esters, acids or partial acid forms thereof wherein the weight ratio is from 1:15 to 15:1.

The herbicidal mixtures and compositions of the present subject matter can be applied pre-plant incorporated, pre- emergence, post-emergence, or directly on the plant. In cases where a co-herbicide/s is also applied, the co-herbicide/s may be applied pre-plant incorporated, pre- emergence, or post-emergence.

According to some embodiments, the co-herbicides may be applied pre-emergence, while the mixture and compositions of the present subject matter, may be applied post-emergence (i.e. directly on the plant).

As used in the present methods, the herbicidal compositions and herbicidal mixtures discussed herein may be applied jointly or in a succession. That is, any of the herbicide which inhibits carotenoid biosynthesis (e.g. aclonifen) and the herbicide which inhibits the action of ALS/AHAS (e.g. imazamox) may be applied jointly or in succession. In one example, the herbicide which inhibits carotenoid biosynthesis (e.g. aclonifen) and the herbicide which inhibits the action of ALS/AHAS (e.g. imazamox) are prepared separately, and the individual formulations are applied as is, or diluted to predetermined concentrations. In a further example the herbicide which inhibits carotenoid biosynthesis (e.g. aclonifen) and the herbicide which inhibits the action of ALS/AHAS (e.g. imazamox) are prepared separately, and the formulations are mixed when diluted to a predetermined concentration. In another example, the herbicide which inhibits carotenoid biosynthesis (e.g. aclonifen) and the herbicide which inhibits the action of ALS/AHAS (e.g. imazamox) are formulated together, and the formulation is applied as it is, or the formulation is diluted to a predetermined concentration.

In an embodiment, the mixture is applied on crops which include one or more of sunflowers, winter wheat, potatoes, peas, carrots, maize, rape, alfalfa, and beans. That is, the locus of undesired vegetation may contain one or more of these crops.

In yet another embodiment, the undesired vegetation may include one or more of *Brassica napus, Arctotheca calendula, Sinapis arvensis, Stellaria media, Sonchus oleraceus, Buglossoides arvense, Ipomoea lonchophylla, Crassula* spp., *Lamium* Sp., *Lamium amplexicaule, Fumaria densiflora, Rumex* spp., *Emex australis, Chenopodium* Sp., *Chenopodium album, Senecio* spp., *Fumaria* spp., *Sisymbrium officinale, Melilotus indicus Marrubium vulgare, Lythrum hyssopifolia, Mesembryanthemum* spp., *Sisymbrium orientale, Sisymbrium irio, Erodium botrys, Cerastium glomeratum, Matthiola longipetala, Echium plantagineum, Lepidium* spp., *Lactuca serriola, Scleroblitum atriplicinum, Papaver hybridum, Carthamus lanatus, Anagallis arvensis, Capsella bursa-pastoris, Chondrilla juncea, Onopordum acaulon, Juncus bufonius, Polygonum* Sp., *Polygonum patulum, Rapistrum rugosum, Silybum marianum, Vicia sativa, Lupinus* spp., *Carrichtera annua, Raphanus raphanistrum, Brassica tournefortii, Polygonum aviculare, Malva parviflora, Solanum nigrum, Amaranthus retroflexus, Galium aparine, Matricaria* Sp., *Matricaria recutita, Veronica* spp., *Papaver rhoeas, Viola arvensis, Stellaria media, Ranunculus repens, Geranium spp., Volunteer Oilseed Rape, Cyanus centaurea, Myosotis arvensis, Echinochloa crus-galli, Ambrosia artemisiifolia, Conyza Canadensis, Hibiscus trionum, Mercurialis annua, Abutilon theophrasti, Fallopia convolvulus, Calystegia sepium, Convolvulus arvensis, Datura stramonium, Digitaria sanguinalis, Persicaria lapathifolia, Ranunculus sardous, Rumex acetosa, Senecio vulgaris, Setaria pumila, Solanum nigrum* and *Sonchus arvensis.*

In a further embodiment, the undesired vegetation may include one or more of *Chenopodium album, Echinochloa crus-galli, Amaranthus retroflexus, Ambrosia artemisiifolia, Hibiscus trionum, Mercurialis annua, Abutilon theophrasti, Calystegia sepium, Digitaria sanguinalis, Conyza Canadensis, Fallopia convolvulus, Persicaria lapathifolia, Setaria pumila, Solanum nigrum* and *Sonchus arvensis.*

The herbicidally effective amounts of the herbicide which inhibits carotenoid biosynthesis to the herbicide which inhibits the action of ALS/AHAS cannot generally be defined, as it varies depending upon various conditions such as the type of the formulation, weather conditions, the type of crop and the type of weeds.

In an embodiment, the herbicidal mixture is applied to the locus of undesired vegetation in an amount, or at a rate of application, of from 0.01 to 100 liter/ha. In yet another embodiment, the herbicidal mixture is applied in an amount of from 0.1 to 10 liter/ha. In a further embodiment, the herbicidal mixture is applied in an amount of from 0.1 to 5 liter/ha. In another embodiment, the herbicidal mixture is applied in an amount of from 0.1 to 2 liter/ha.

In a specific embodiment, the mixture is applied to the locus of undesired vegetation in an amount of 0.1 liter/ha. In yet another specific embodiment, the mixture is applied in an amount of 0.25 liter/ha. In still another specific embodiment, the mixture is applied in an amount of 0.5 liter/ha. In still yet another specific embodiment, the mixture is applied in an amount of 0.75 liter/ha. In a further specific embodiment, the mixture is applied in an amount of 2 liter/ha. In yet another specific embodiment, the mixture is applied in an amount of 1 liter/ha.

It should be noted that the above mentioned rates of application relate specifically to the rates of active ingredients being applied. According to some embodiments, the overall spray volume may be 50-400 liters/ha. In further embodiments, the overall spray volume may be between 90-300 liters/ha.

In another embodiment, the herbicidal mixture is applied to the locus of undesired vegetation in an amount of from 1 to 1000 g/ha. In a further embodiment, the herbicidal mixture is applied in an amount of from 200 to 800 g/ha. In an embodiment, the herbicidal mixture is applied in an amount of from 275-350 g/ha. In another embodiment, the herbicidal mixture is applied in an amount of from 580-710 g/ha.

In a specific embodiment, the mixture of the herbicide which inhibits carotenoid biosynthesis and the herbicide which inhibits the action of ALS/AHAS may be applied to the locus of undesired vegetation in an amount of between 460-700 g/ha. In yet another specific embodiment, the mixture of aclonifen and imazamox may be applied in an amount of 640 g/ha. Correspondingly, the amount of the herbicide which inhibits carotenoid biosynthesis (e.g. aclonifen) may be between 450 g/ha to 650 g/ha, and the amount of the herbicide which inhibits the action of ALS/AHAS (e.g. imazamox) may be 10 to 50 g/ha.

In another embodiment, the present subject matter provides a kit comprising the herbicidal mixture as described herein, or components thereof. Such kits may comprise, in addition to the aforementioned active ingredients, one or more additional active and/or inactive ingredients, either within the provided herbicidal composition or separately. Certain kits comprise a herbicide which inhibits carotenoid biosynthesis and a herbicide which inhibits the action of ALS/AHAS or an esters or salt of any of the foregoing, and/or a combination thereof, each in a separate container, and each optionally combined with a carrier.

In an embodiment, the kit may comprise aclonifen and imazamox.

A synergistic effect exists wherever the action of a combination of active ingredients is greater than the sum of the action of each of the components alone. Therefore, a synergistically effective amount (or an effective amount of a synergistic composition or combination) as discussed herein is an amount that exhibits greater herbicidal activity than the sum of the herbicidal activities of the individual components.

Comparison of results between formulations, mixtures and individual herbicides may be accomplished by a number of different methods. The synergy of the mixture or formulation may be calculated, the %survival of the weeds may be determined, %efficacy of the herbicide may be determined and the amount of biomass of the weeds may be determined, visually or otherwise. It may be appreciated that biomass may be defined as the organic material present on the weeds. In some embodiments, the application of herbicides may diminish the biomass of weeds. This may be done by preventing the weed to grow beyond a certain point and/or prevent the weed from developing seeds and/or leaves and/or branches and/or other parts of the plant.

In the context of the present subject matter, the term "synergy" is as defined by Colby S. R. in an article entitled "Calculation of the synergistic and antagonistic responses of herbicide combinations" published in the journal Weeds, 1967, 15, p. 20-22, incorporated herein by reference in its entirety. The action expected for a given combination of three active ingredients can be calculated as follows:

$$E = X + Y - \frac{XY}{100}$$

in which E represents the expected percentage of herbicidal control for the combination of the three herbicides at defined doses (for example equal to x, y and z respectively), X is the percentage of herbicidal control observed by aclonifen at a defined dose (equal to x), Y is the percentage of herbicidal control observed by imazamox at a defined dose (equal to y). When the percentage of herbicidal control observed for the combination is greater than the expected percentage, there is a synergistic effect. When the percentage of control observed for the combination is equal to the expected percentage, there is an additive effect and wherein the percentage of herbicidal control observed for the combination is lower than the expected percentage, there is an antagonistic effect.

**EXPERIMENTAL DETAILS**

Formulation Example according to the invention

One exemplary embodiment of the ready mix suspension concentrates formulation is illustrated in Table 1, below:

TABLE 1

| Ingredient | % w/w |
|---|---|
| Aclonifen | 28.72 |
| Imazamox | 1.92 |
| Polymeric surfactant (Nonionic surfactant) | 1.45 |
| Ethoxylated Tristyrylphenol (Surfactant) | 0.73 |
| Sodium Salt Of Naphthalene Sulfonate Condensate (Surfactant) | 0.32 |
| Propylene glycol (Antifreeze) | 5.45 |
| Antifoaming compound | 0.05 |
| Xanthan Gum (Thickener) | 0.21 |

(continued)

| Ingredient | % w/w |
|---|---|
| 1,2-Benzisothiazol-3(2H)-one (Biocide) | 0.10 |
| Water | 61.04 |
| d= 1.10 g/l. | |

Example 1

Four herbicide treatments were compared:

a) Imazamox 20 g/l + Aclonifen 300 g/l SC formulation (Application Rate of 2.0 l/ha)
b) Imazamox 40 g/l SC + Aclonifen 600 g/l SC tank-mix (Application Rate of 1.0 l/ha + 1.0 l/ha)
c) Imazamox 40 g/l SL formulation (commercially available as Pulsar) (Application Rate of 1.0 1/ha)
d) Aclonifen 600 g/l SC formulation (Application Rate of 1.0 l/ha)

The above treatments were applied to a variety of weeds. Table 2 summarizes the percent efficacy results. The results are based on a 0 to 100 scale where 0 is no effect and 100 is complete control. Table 2 compares the individual applications aclonifen and imazamox with the tank-mix of the two active ingredients as well as the ready-mix formulation of aclonifen and imazamox.

Results

Table 2 - Efficacy (% Control)

| WEED | n | Imazamox SL 40 g ai/ha 1,00 l/ha (avg) | Aclonifen SC 600 g ai/ha 1,00 l/ha (avg) | Imazamox + Aclonifen 40 + 600 g ai/ha 1,00 l + 1,00 l/ha (tank mix) (avg) | Imazamox + Aclonifen SC 20 +300 g ai/ha 2,00 l/ha (avg) |
|---|---|---|---|---|---|
| *Chenopodium album* | 6 | 91.0 | 85.1 | 98.2 | 98.3 |
| *Echinochloa crus-galli* | 3 | 85.1 | 78.1 | 92.8 | 90.4 |
| *Amaranthus retroflexus* | 2 | 93.3 | 72.0 | 97.4 | 97.2 |
| *Ambrosia artemisiifolia* | 2 | 88.4 | 78.9 | 96.9 | 95.0 |
| *Hibiscus trionum* | 2 | 58.1 | 81.3 | 89.4 | 90.0 |
| *Mercurialis annua* | 2 | 69.0 | 74.7 | 88.5 | 80.8 |
| *Abutilon theophrasti* | 1 | 90.5 | 50.0 | 96.8 | 96.3 |
| *Calystegia sepium* | 1 | 80.5 | 66.8 | 89.9 | 95.6 |
| *Digitaria sanguinalis* | 1 | 75.0 | 62.5 | 94.3 | 86.3 |
| *Conyza Canadensis* | 1 | 37.5 | 25.0 | 52.5 | 32.5 |
| *Fallopia convolvulus* | 1 | 92.8 | 91.0 | 97.0 | 97.0 |

(continued)

| WEED | n | Imazamox SL 40 g ai/ha 1,00 l/ha (avg) | Aclonifen SC 600 g ai/ha 1,00 l/ha (avg) | Imazamox + Aclonifen 40 + 600 g ai/ha 1,00 l + 1,00 l/ha (tank mix) (avg) | Imazamox + Aclonifen SC 20 +300 g ai/ha 2,00 l/ha (avg) |
|---|---|---|---|---|---|
| *Persicaria lapathifolia* | 1 | 67.9 | 38.3 | 97.7 | 99.5 |
| *Setaria pumila* | 1 | 81.0 | 20.0 | 97.0 | 84.0 |
| *Sonchus arvensis* | 1 | 84.6 | 84.7 | 95.9 | 98.3 |

Example 2

Three herbicide treatments were compared:

a) Imazamox 40 g/l SC + Aclonifen 600 g/l SC tank-mix (Application Rate of 1.0 l/ha + 1.0 l/ha)

b) Imazamox 40 g/l SL formulation (commercially available as Pulsar) (Application Rate of 1.0 l/ha)

c) Aclonifen 600 g/l SC formulation (Application Rate of 1.0 l/ha)

The above treatments were applied to a variety of weeds. Tables 3-4 summarize the percent efficacy results. The results are based on a 0 to 100 scale where 0 is no effect and 100 is complete control. Table 3-4 compares the individual applications of aclonifen and imazamox with the tank of the two active ingredients.

Results

Table 3 - Efficacy (% Control) of *Persicaria lapathifolia, Setaria pumila* and *Solanum Nigrum* (Colby Calculation)

| A.I. | Weed | Application rate (ml or gr) | % control observed | % control expected | Colby Ratio |
|---|---|---|---|---|---|
| Imazamox 40 g/ha | *Persicaria lapathifolia* | 1000 | 67.90 | | |
| Aclonifen 600 g/ha | | 1000 | 38.30 | | |
| Imazamox 40 + Aclonifen 600 SC (tank-mix) | | 2000 | 96.10 | 80.19 | 1.20 |
| Imazamox 40 g/ha | *Setaria pumila* | 1000 | 81 | | |
| Aclonifen 600 g/ha | | 1000 | 20 | | |
| Imazamox 40 + Aclonifen 600 SC (tank-mix) | | 2000 | 97 | 84.80 | 1.14 |
| Imazamox 40 g/ha | *Solanum Nigrum* | 1000 | 79.45 | | |
| Aclonifen 600 g/ha | | 1000 | 33.33 | | |
| Imazamox 40 + Aclonifen 600 SC (tank-mix) | | 2000 | 100.00 | 86.30 | 1.16 |

Table 4 - Efficacy (% Control) of *Setaria pumila* (Colby Calculation)

| AI | Weed | Application rate (ml or gr) | % control observe d 41 DAA | % control observe d 62 D......AA | % control observe d 107 DAA | % control expecte d 41 DAA | % control expecte d 62 DAA | % control expecte d 107 DAA | Colby Ratio 13 DAA | Colby Ratio 38 DAA | Colby Ratio 76 DAA |
|---|---|---|---|---|---|---|---|---|---|---|---|
| Imazam ox 40 g/ha | *Setaria pumila* | 1000 | 20.00 | 90.00 | 81.00 | | | | | | |
| Aclonife n 600 g/ha | | 1000 | 11.00 | 20.00 | 20.00 | | | | | | |
| Imazam ox 40 + Aclonife n 600 SC (tank-mix) | | 2000 | 71.00 | 97.00 | 97.00 | 28.80 | 92.00 | 84.80 | 2.47 | 1.05 | 1.14 |
| *DAA = Days after application | | | | | | | | | | | |

Example 3

Four herbicide treatments were compared:

a) Imazamox 20 g/l + Aclonifen 300 g/l SC formulation (Application Rate of 2.0 l/ha)

b) Imazamox 40 g/l SC + Aclonifen 600 g/l SC tank-mix (Application Rate of 1.0 l/ha + 1.0 l/ha)

c) Imazamox 40 g/l SL formulation (commercially available as Pulsar) (Application Rate of 1.0 l/ha)

d) Aclonifen 600 g/l SC formulation (Application Rate of 1.0 l/ha)

The above treatments were applied to a variety of weeds. Table 5 summarizes the percent efficacy results. The results are based on a 0 to 100 scale where 0 is no effect and 100 is complete control. Table 5 compares the individual applications aclonifen and imazamox with the tank-mix of the two active ingredients as well as the ready-mix formulation of aclonifen and imazamox.

Results

Table 5 - Efficacy (% Control) of *Persicaria lapathifolia* (Colby Calculation)

| AI | Weed | Application rate (ml or gr) | % control observed 13 DAA | % control observed 38 DAA | % control observed 76 DAA | % control expected 13 DAA | % control expected 38 DAA | % control expected 76 DAA | Colby Ratio 13 DAA | Colby Ratio 38 DAA | Colby Ratio 76 DAA |
|---|---|---|---|---|---|---|---|---|---|---|---|
| Imazamo x 40 g/ha | | 1000 | 79.47 | 58.11 | 55.50 | | | | | | |
| Aclonifen 600 g/ha | *Persicaria lapathifolia* | 1000 | 71.02 | 44.14 | 38.25 | | | | | | |
| Imazamo x + Aclonifen SC (ready-mix) | | 2000 | 82.47 | 85.93 | 85.93 | 94.05 | 76.60 | 72.52 | 0.88 | 1.12 | 1.18 |
| Imazamo x 40 + Aclonifen 600 SC (ready-mix) | | 2000 | 81.87 | 81.33 | 81.33 | 94.05 | 76.60 | 72.52 | 0.87 | 1.06 | 1.12 |

The trial detailed in Tables 1-4 were conducted on Sunflower crop in France, Hungary and Romania.

Conclusions

As can be seen in Table 1, both the mixture and the formulation comprising aclonifen and imazamox provided better results with respect to the efficacy of the herbicides when compared when aclonifen and imazamox were applied individually. Although only a small number of weeds are shown in the above Table 1, it can be appreciated that similar efficacy results may be obtained when the mixture or herbicides of the above mentioned formulation are applied to different weeds.

As shown in Tables 2-4 the percentage of herbicidal control observed for the combination is greater than the expected percentage (Colby Ratio o/e). The data shows efficacy of the combination of imazamox and aclonifen on *Persicaria lapathifolia, Setaria pumila, Solanum Nigrum* and *Persicaria lapathifolia* in a crop of sunflower. It can therefore, be concluded that by combining imazamox and aclonifen, in a weight ratio of from 1:15 to 15:1, a herbicidal mixture which has a broader spectrum of activity is obtained without crop damage. It can be appreciated that similar synergistic results may be obtained when the mixture or herbicides of the above mentioned formulation are applied to different weeds.

**Claims**

1. A synergistic herbicidal mixture for the selective control of weeds and grasses in crops of cultivated plants, comprising a) a herbicide which inhibits carotenoid biosynthesis; and b) a herbicide which inhibits the action of ALS/AHAS;

   wherein the herbicide which inhibits carotenoid biosynthesis is aclonifen and salts, esters, acids, or partial acid forms thereof;
   wherein the herbicide which inhibits the action of ALS/AHAS is imazamox and salts, esters, acids, or partial acid forms thereof; and
   wherein the weight ratio of the herbicide which inhibits carotenoid biosynthesis, to the herbicide which inhibits the action of ALS/AHAS is from 1:15 to 15:1.

2. The synergistic herbicidal mixture of claim 1, wherein the herbicide which inhibits carotenoid biosynthesis and the herbicide which inhibits the action of ALS/AHAS are applied jointly or in a succession.

3. The synergistic herbicidal mixture of of claim 1 or 2, wherein said mixture is used to provide a rate of application of from 0.1 to 10 liter/ha.

4. The synergistic herbicidal mixture of claim 3, wherein said mixture is used to provide a rate of application of from 1-2 liter/ha.

5. The synergistic herbicidal mixture of any one of claims 1-4, wherein the mixture is applied in an amount of from 200 to 800 g/ha.

6. The synergistic herbicidal mixture of claim 5, wherein the amount of the herbicide which inhibits carotenoid biosynthesis is between 460-700 g/ha and the amount of the herbicide which inhibits the action of ALS/AHAS is between 10-50 g/ha.

7. A herbicidal synergistic composition for the selective control of weeds and grasses in crops of cultivated plants comprising a herbicidal mixture according to any one of claims 1-6.

8. The composition of claim 7 further comprising c) at least one agriculturally acceptable carrier.

9. The composition of claim 7 or 8, further comprising at least one surfactant, solid diluent, liquid diluent, or a combination thereof.

10. A method of controlling undesired vegetation comprising applying to a locus of the undesired vegetation a herbicidally effective amount of a mixture according to any one of claims 6.

11. The method of claim 10, comprising the step of applying the herbicides jointly or separately, pre-emergence, post-emergence or pre- and post-emergence to the plants, parts of the plants, seeds of the plants or the area under cultivation.

12. A method of controlling undesired vegetation comprising applying to a locus of the undesired vegetation the composition of any one of claims 7-9.

**Patentansprüche**

1. Eine synergistische herbizide Mischung zur selektiven Kontrolle von Unkräutern und Gräsern in Kulturen von Kulturpflanzen, die Folgendes umfasst: a) ein Herbizid, das Carotinoid-Biosynthese hemmt; und b) ein Herbizid, das die Wirkung von ALS/AHAS hemmt;

   wobei das Herbizid, das Carotinoid-Biosynthese hemmt, Aclonifen und Salze, Ester, Säuren oder partielle Säureformen davon ist;
   wobei das Herbizid, das die Wirkung von ALS/AHAS hemmt, Imazamox und Salze, Ester, Säuren oder partielle Säureformen davon ist; und
   wobei das Gewichtsverhältnis des Herbizids, das Carotinoid-Biosynthese hemmt, zu dem Herbizid, das die Wirkung von ALS/AHAS hemmt, von 1:15 bis 15:1 beträgt.

2. Die synergistische herbizide Mischung gemäß Anspruch 1, wobei das Herbizid, das Carotinoid-Biosynthese hemmt, und das Herbizid, das die Wirkung von ALS/AHAS hemmt, gemeinsam oder nacheinander ausgebracht werden.

3. Die synergistische herbizide Mischung gemäß Anspruch 1 oder 2, wobei die Mischung verwendet wird, um eine Ausbringungsrate von 0,1 bis 10 l/ha bereitzustellen.

4. Die synergistische herbizide Mischung gemäß Anspruch 3, wobei die Mischung verwendet wird, um eine Ausbringungsrate von 1-2 l/ha bereitzustellen.

5. Die synergistische herbizide Mischung gemäß einem beliebigen der Ansprüche 1-4, wobei die Mischung in einer Menge von 200 bis 800 g/ha ausgebracht wird.

6. Die synergistische herbizide Mischung gemäß Anspruch 5, wobei die Menge des Herbizids, das Carotinoid-Biosynthese hemmt, zwischen 460-700 g/ha beträgt und die Menge des Herbizids, das die Wirkung von ALS/AHAS hemmt, zwischen 10-50 g/ha beträgt.

7. Eine herbizide synergistische Zusammensetzung zur selektiven Kontrolle von Unkräutern und Gräsern in Kulturen von Kulturpflanzen, die eine herbizide Mischung gemäß einem beliebigen der Ansprüche 1-6 umfasst.

8. Die Zusammensetzung gemäß Anspruch 7, die weiter c) mindestens einen landwirtschaftlich verträglichen Träger umfasst.

9. Die Zusammensetzung gemäß Anspruch 7 oder 8, die weiter mindestens einen grenzflächenaktiven Stoff, mindestens ein festes Verdünnungsmittel, flüssiges Verdünnungsmittel oder eine Kombination davon umfasst.

10. Ein Verfahren zur Kontrolle unerwünschter Vegetation, das das Aufbringen einer herbizid wirksamen Menge einer Mischung gemäß einem beliebigen der Ansprüche 1-6 auf einen Ort der unerwünschten Vegetation umfasst.

11. Das Verfahren gemäß Anspruch 10, das den Schritt des Aufbringens der Herbizide gemeinsam oder separat, als Vorlaufbehandlung, Nachlaufbehandlung oder Vor- und Nachlaufbehandlung auf die Pflanzen, Teile der Pflanzen, Samen der Pflanzen oder die kultivierte Fläche umfasst.

12. Ein Verfahren zum Kontrollieren unerwünschter Vegetation, das das Aufbringen der Zusammensetzung gemäß einem beliebigen der Ansprüche 7-9 auf einen Ort der unerwünschten Vegetation umfasst.

**Revendications**

1. Mélange herbicide synergique pour lutte sélective contre les mauvaises herbes et plantes adventices dans des cultures de végétaux cultivés, comprenant :

a) un herbicide qui inhibe la biosynthèse de caroténoïdes,
b) et un herbicide qui inhibe l'action de l'ALS/AHAS,

dans lequel l'herbicide qui inhibe la biosynthèse de caroténoïdes est l'aclonifène et ses formes sels, esters, acides ou acides partiels,
dans lequel l'herbicide qui inhibe l'action de l'ALS/AHAS est l'imazamox et ses formes sels, esters, acides ou acides partiels,
et dans lequel le rapport pondéral de l'herbicide inhibant la biosynthèse de caroténoïdes à l'herbicide inhibant l'action de l'ALS/AHAS vaut de 1/15 à 15/1.

2. Mélange herbicide synergique conforme à la revendication 1, dont l'herbicide inhibant la biosynthèse de caroténoïdes et l'herbicide inhibant l'action de l'ALS/AHAS sont appliqués conjointement ou successivement.

3. Mélange herbicide synergique conforme à la revendication 1 ou 2, lequel mélange est utilisé de manière à fournir un taux d'application de 0,1 à 10 litres/ha.

4. Mélange herbicide synergique conforme à la revendication 3, lequel mélange est utilisé de manière à fournir un taux d'application de 1 à 2 litres/ha.

5. Mélange herbicide synergique conforme à l'une des revendications 1 à 4, lequel mélange est appliqué en une quantité de 200 à 800 g/ha.

6. Mélange herbicide synergique conforme à la revendication 5, dans lequel la quantité de l'herbicide inhibant la biosynthèse de caroténoïdes vaut entre 460 et 700 g/ha et la quantité de l'herbicide inhibant l'action de l'ALS/AHAS vaut entre 10 et 50 g/ha.

7. Composition herbicide synergique pour la lutte sélective contre les mauvaises herbes et plantes adventices dans des cultures de végétaux cultivés, comprenant un mélange herbicide conforme à l'une des revendications 1 à 6.

8. Composition conforme à la revendication 7, qui comprend en outre
c) au moins un véhicule admissible en agriculture.

9. Composition conforme à la revendication 7 ou 8, qui comprend en outre au moins un tensioactif, diluant solide ou diluant liquide, ou une combinaison de tels composants.

10. Procédé de lutte contre des végétaux indésirables, comprenant le fait d'appliquer, en un endroit où poussent des végétaux indésirables, une quantité à effet herbicide d'un mélange conforme à l'une des revendications 1 à 6.

11. Procédé conforme à la revendication 10, comprenant une étape consistant à appliquer les herbicides conjointement ou séparément, avant levée, après levée, ou avant et après levée, sur les végétaux, des parties des végétaux, des semences des végétaux ou la surface en culture.

12. Procédé de lutte contre des végétaux indésirables, comprenant le fait d'appliquer, en un endroit où poussent des végétaux indésirables, une composition conforme à l'une des revendications 7 à 9.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4394159 A

- US 5334576 A

**Non-patent literature cited in the description**

- *Int. J. Agri. Biol.,* 2004, vol. 6 (1), 209-212

- **COLBY S. R.** Calculation of the synergistic and antagonistic responses of herbicide combinations. *journal Weeds,* 1967, vol. 15, 20-22